# EUROPÄISCHE PATENTANMELDUNG

(11) **EP 0 522 389 A2**
(43) Veröffentlichungstag der Anmeldung: **13.01.1993**
(21) Anmeldenummer: 92110939.3
(22) Anmeldetag: 29.06.1992
(51) Int. Cl.: B65D 81/12

(54) **Füllmaterial für Verpackungszwecke**

(30) Priorität: 10.07.1991 DE 4122803
(71) Anmelder: Schenk, Roland, D-72336 Balingen (DE)
(72) Erfinder: Schenk, Roland, D-72336 Balingen (DE)
(74) Vertreter: Möbus, Rudolf, Dipl.-Ing.

(57) **Zusammenfassung**

Die aus einem umweltverträglichen Faserstoffbrei, insbesondere Papierfaserbrei, geformten und durch Trocknen stabilisierten Füllkörper (10) sind als offene Hohlkörper ausgebildet, die durch Innenwandungen versteift sein können. Die freien Ränder (12.1) der Innenwandungen verlaufen konkav und/oder mit Abstand von der Öffnungsebene der Hohlkörper und erlauben ein gegenseitiges "Aufsatteln" der Füllkörper (10) die beispielsweise Kalottenform haben können.

## Beschreibung

Die Erfindung betrifft ein Füllmaterial für Verpackungszwecke, bestehend aus schüttbaren und rieselfähigen Füllkörpern, die aus einem Faserstoffbrei, insbesondere Papierfaserbrei, geformt und durch Trocknen in ihrer Form gehalten sind.

Aus der DE-OS 37 18 541 ist bereits bekannt, Füllkörper für Verpackungszwecke aus wiederverwertbarem Zellstoff-Fasermaterial, insbesondere aus Altpapier, herzustellen, das wesentlich problemloser entsorgt werden kann, als die immer noch weitverbreiteten Füllkörper aus geschäumtem Kunststoffmaterial. Die vorgeschlagenen getrockneten Papierfaserkugeln oder Papierfaserwürste haben jedoch den Nachteil, daß sie ein merklich größeres Gewicht als die bekannten geschäumten Kunststoff-Füllkörper haben. Außerdem ist ihre Elastizität und damit ihre Stoßdämpfungseigenschaft als Faservollkörper relativ begrenzt.

Der Erfindung liegt die Aufgabe zugrunde, ein Füllmaterial der eingangs genannten Art aus wiederverwertbarem und auch leicht entsorgbarem natürlichem Material so auszubilden, daß es in den Verpackungen nur eine relativ geringe und vertretbare Gewichtserhöhung erbringt und gute Stoßdämpfungseigenschaften aufweist.

Die gestellte Aufgabe wird mit dem genannten Füllmaterial erfindungsgemäß dadurch gelöst, daß die Füllkörper als offene Hohlkörper ausgebildet sind. Vorteilhafterweise können die Füllkörper schüssel- oder wannenartig mit einer gekrümmten Wandung ausgebildet sein.

Die erfindungsgemäß ausgebildeten Füllkörper haben durch ihre Hohlform nicht nur ein merklich kleineres Gewicht, als aus Papierfaserbrei geformte Vollkörper, sondern sie erbringen durch ihre offene Hohlkörperform noch weitere wichtige Vorteile. Die wesentlichen Vorteile sind hierbei eine relativ große Wandungselastizität mindestens im Öffnungsbereich der Hohlkörper und der Umstand, daß sich die Füllkörper durch die Hohlkörperöffnung im Füllverband besser aneinander und aufeinander abstützen können.

Die Füllkörper können zweckmäßig durch mindestens eine eingeformte Innenwandung versteift sein, wobei durch die Formgebung und Wandungsstärke der Füllkörper eine ausreichende Elastizität erreichbar ist, insbesondere elastisch nachgiebige Wandungsbereiche im Öffnungsbereich der Füllkörper gewährleistet sind. Die mindestens eine Innenwandung der hohlen Füllkörper kann vorteilhafterweise mit Abstand von einer durch einen Öffnungsrand der Füllkörper bestimmten Öffnungsebene zurückversetzt enden, wodurch eine Sattelvertiefung im Öffnungsbereich verbleibt, die ein geringfügiges Eintauchen eines benachbarten Füllkörpers und seine bessere Abstützung erlaubt.

Nachfolgend werden Ausführungsbeispiele erfindungsgemäß ausgebildeter Füllkörper anhand der beiliegenden Zeichnung näher erläutert.

Im einzelnen zeigen:
- Fig. 1: eine Draufsicht auf die Öffnungsseite eines hohlen kalottenförmigen Füllkörpers;
- Fig. 2: einen Schnitt durch den Füllkörper entlang der Linie II-II in Fig. 1;
- Fig. 3: eine Seitenansicht des Füllkörpers nach Fig. 1;
- Fig. 4: eine Draufsicht auf die geschlossene Kalottenseite des Füllkörpers;
- Fig. 5: eine der Fig. 4 entsprechende Draufsicht auf einen mit Sicken versehenen Füllkörper;
- Fig. 6: eine Seitenansicht des Füllkörpers nach Fig. 5;
- Fig. 7: zwei aneinander abgestützte Füllkörper nach Fig. 1 bis 4 in Seitenansicht;
- Fig. 8: eine Seitenansicht eines wannenförmigen länglichen Füllkörpers;
- Fig. 9: eine Draufsicht auf die Öffnungsseite des Füllkörpers nach Fig. 8;
- Fig. 10: drei Füllkörper nach Fig. 8 in gegenseitiger Anlage;
- Fig. 11: eine der Fig. 1 entsprechende Ansicht einer anderen Füllkörperausführung.

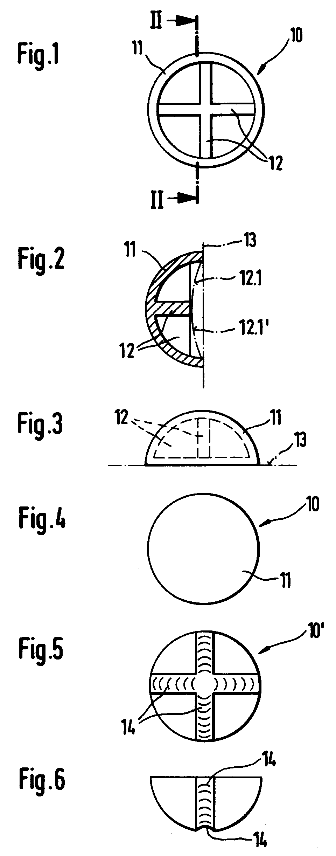

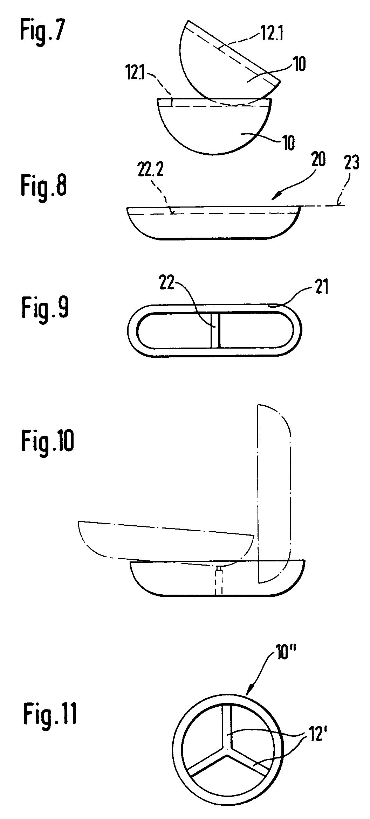

Der aus den Fig. 1 bis 4 und 7 ersichtliche Füllkörper 10 hat die Form einer hohlen Halbkugel. Seine Kalottenwandung 11 ist durch zwei sich kreuzende Innenwände 12 versteift. Die Kalottenwandung 11 und die Innenwände 12 haben annähernd gleiche Wandungsstärke, was den Vorteil eines gleichmäßigen Trocknens der zweckmäßig auf einem Saugformkopf aus Papierfaserbrei, insbesondere Altpapier-Faserbrei, hergestellten Füllkörpern erlaubt. Eine gleichmäßige Wandungsstärke ist aber nicht zwingend. Die Wandungen weisen ohnehin auf die Öffnungsebene 13 hin eine gewisse Verjüngung auf, die das Ausformen der Füllkörper erleichtert. Die freien Ränder 12.1 (Fig. 2) der Innenwandungen 12 sind gegenüber der Öffnungsebene 13 zurückgesetzt, um ein gegenseitiges "Aufsatteln" der Füllkörper zu erlauben, wie es in Fig. 7 dargestellt ist. Der freie Rand 12.1' der Innenwandungen 12 kann auch wie in Fig. 2 angedeutet einwärts gekrümmt sein. Ein konkaver Verlauf der Ränder der Innenwandungen erlaubt ein "Aufsatteln", auch wenn die Innenwandungen an den Übergangsstellen zur Kalottenwandung nicht zurückgesetzt sind.

Das in den Fig. 5 und 6 dargestellte Ausführungsbeispiel eines kalottenförmigen Füllkörpers 10' unterscheidet sich von dem Füllkörper nach Fig. 1 durch Sicken 14 auf seiner Außenseite, welche ein gegenseitiges Abstützen der Füllkörper aneinander im Füllverband zusätzlich erleichtern. Der Füllkörper 10'' in Fig. 11 weist drei sich in der Füllkörpermitte treffende Innenwandungen 12' auf.

Die Fig. 8 bis 10 zeigen einen länglichen wannenförmigen Füllkörper 20, dessen gekrümmte Wannenwandung 21 durch eine Querwandung 22 versteift ist. Auch hier verläuft der freie Rand 22.2 der Innenwandung 22 mit Abstand von der Öffnungsebene 23, wie aus Fig. 8 ersichtlich ist. Wie sich die wannenförmigen Füllkörper 20 im Füllverband aneinander abstützen können, zeigt Fig. 10.

Die als offene Hohlkörper ausgebildeten Füllkörper können auch andere Querschnitte aufweisen und auch aus anderen natürliche Faserstoffe als Zellstoff gefertigt sein. Die Füllkörper sind leicht verrottbar und können keine Umweltbelastung darstellen, wie dies bisher übliche Füllkörper aus geschäumtem Kunststoffmaterial tun. Die Füllkörper sind aber auch voll wiederverwertbar. Sie lassen sich mit Wasser wieder zu einem Faserstoffbrei auflösen, aus welchem neue Füllkörper geformt oder Papier oder Pappe ereugt werden können.

## Patentansprüche

1. Füllmaterial für Verpackungszwecke, bestehend aus schüttbaren und rieselfähigen Füllkörpern, die aus einem Faserstoffbrei, insbesondere Papierfaserbrei, geformt und durch Trocknen in ihrer Form gehalten sind, dadurch gekennzeichnet, daß die Füllkörper (10, 10', 20) als offene Hohlkörper ausgebildet sind.

2. Füllmaterial nach Anspruch 1, dadurch gekennzeichnet, daß die Füllkörper (10, 10', 20) schüssel- oder wannenartig mit einer gekrümmten Wandung (11, 21) ausgebildet sind.

3. Füllmaterial nach Anspruch 1 oder 2, dadurch gekennzeichnet, daß die Füllkörper (10, 20) durch Formgebung und Wandungsstärke mindestens in ihrem Öffnungsbereich elastisch nachgiebige Wandungsbereiche aufweisen.

4. Füllmaterial nach einem der Ansprüche 1 bis 3, dadurch gekennzeichnet, daß die Füllkörper (10, 20) durch mindestens eine eingeformte Innenwandung (12, 22) versteift sind.

5. Füllmaterial nach Anspruch 4, dadurch gekennzeichnet, daß der freie Rand (12.1, 22.2) der Innenwandung konkav gekrümmt verläuft.

6. Füllmaterial nach Anspruche 4 oder 5, dadurch gekennzeichnet, daß die mindestens eine Innenwandung (12, 22) mit Abstand von einer durch den Öffnungsrand der Füllkörper (10, 20) bestimmten Öffnungsebene (13, 23) endet.

7. Füllmaterial nach einem der Ansprüche 1 bis 6, dadurch gekennzeichnet, daß die Füllkörper (10, 10') zu ihrer Versteifung sich treffende oder kreuzende Innenwandungen (12) aufweisen.

8. Füllmaterial nach einem der Ansprüche 1 bis 7, dadurch gekennzeichnet, daß die Hohlkörperwandung (11, 21) und die Innenwandung(en) (12, 22) der Füllkörper (10, 10', 20) mindestens annähernd gleiche Wandstärken haben.

9. Füllmaterial nach einem der Ansprüche 1 bis 7, dadurch gekennzeichnet, daß die Hohlkörperwandung (11, 21) und die Innenwandung(en) (12, 22) unterschiedliche Wandstärken haben.

10. Füllmaterial nach einem der Ansprüche 1 bis 9, dadurch gekennzeichnet, daß die Hohlkörperwandung (11, 21) und/oder die Innenwandung(en) (12, 22) mit Sicken (14) versehen sind.

11. Füllmaterial nach einem der Ansprüche 1 bis 10, dadurch gekennzeichnet, daß die Hohlkörperwandung (11) der Füllkörper (10, 10') die Form einer Kalotte hat.
